Europäisches Patentamt

European Patent Office

Office européen des brevets

(11) Publication number: **0 118 315**

**A2**

(12) **EUROPEAN PATENT APPLICATION**

(21) Application number: **84301508.2**

(22) Date of filing: **07.03.84**

(51) Int. Cl.³: **A 22 B 5/08**
**A 46 B 9/02**

(30) Priority: **07.03.83 DK 1106/83**

(43) Date of publication of application:
**12.09.84 Bulletin 84/37**

(84) Designated Contracting States:
**DE GB NL SE**

(71) Applicant: **Slagteriernes Forskningsinstitut**
**Maglegaardsvej 2**
**DK-4000 Roskilde(DK)**

(72) Inventor: **Petersen, Olfert Helge**
**Sondergaardsvej 3 Allerslev**
**DK-4320 Lejre(DK)**

(72) Inventor: **Petersen, Carl**
**Enghavevej 20**
**DK-7800 Skive(DK)**

(72) Inventor: **Petersen, Anthony**
**Ullerupvej 40**
**DK-6780 Skaerbaek(DK)**

(74) Representative: **Alexander, Thomas Bruce et al,**
**Boult, Wade & Tennant 27 Furnival Street**
**London EC4A 1PQ(GB)**

(54) **Brushing device.**

(57) A brushing device, for a rotating brushing machine or similar surface treating apparatus, is axially formed from a plurality of sections (1, 5, 10) with relatively long bristles and other sections (2, 6, 7, 11, 12) with relatively short bristles and/or without bristles. The sections with relatively long bristles are always separated from each other by sections with relatively short bristles and/or sections without bristles. The device is suitable for brushing carcasses continuously conveyed on a slaughter line. The carcasses will assume specific positions during conveyance past the device, in which positions the entire treated rind surface is cleaned by the brushing device, because the length of the bristles is adapted to the contour of the carcass in the brushed area.

FIG. 2

BRUSHING　DEVICE

The present invention relates to a brushing device, for use in a rotating brushing machine or similar surface treating apparatus.

Objects of irregular shape such as pig carcasses are difficult to brush in brushing plants because the protruding parts prevent efficient brushing of the other parts.  Hence, in bacon factories it is a wellknown fact that it is difficult to obtain a clean rind by mechanical brushing of · pig carcasses that are automatically conveyed on a slaughter line.  The legs, for example, prevent thorough cleaning of belly and breast, and the legs themselves may be damaged by excessive treatment. As a consequence, it is necessary to use many separate brushing machines and brushing devices, and even then it is still often necessary to perform a supplemenetary manual cleaning using a knife.

According to the invention there is provided a brushing device which in the axial direction comprises a plurality of brush sections with relatively long bristles and other sections with relatively short bristles and/or sections without bristles, the sections with relatively long bristles being separated from each other by sections with relatively short bristles and/or sections without bristles.

The brushing device according to the invention can be used in rotating brushing machines or similar surface treating apparatuses. For example, it may be used in slaughterhouses in machines for brushing pig carcasses which are conveyed continuously on a slaughter line in lateral relationship suspended from gambrels. In this case the legs of a carcass will quickly find their way into the sections with relatively short bristles or without bristles when encountering the rotating brushing device. The legs will remain in said sections for a while as the gambrel moves on. When the carcass has assumed a certain inclination, the legs will be forced out and find their way into a successive section with relatively short bristles or without bristles. This will be repeated until the legs finally clear the brushing device completely.

Hence, the carcass will assume specific positions during conveyance past the brushing device, and the brush sections, therefore, may be formed in a manner providing efficient treatment of the rind surface in the positions assumed, as it will be possible to adapt the bristle length to the carcass profile in a given position.

In a first embodiment the device has no sections without bristles.

In a second embodiment the device comprises sections with relatively long bristles and other sections with relatively short bristles and sections without bristles, the sections with relatively long bristles being separated by sections without bristles.

In a third embodiment the device comprises sections with relatively long bristles and other sections with relatively short bristles and sections without bristles, at least one section without bristles being arranged between a section with relatively long bristles and a section with relatively short bristles.

At least one section with relatively long bristles may be formed with greater bristle density than that of any section with relatively short bristles. The result is a more vigorous brushing with these brush sections, and at the same time the protruding parts of the carcass will have greater difficulty in passing such sections.

The device may consist of a plurality of clamped brush rings arranged in sections with bristles of·

even length in each section, between which brush rings spacer rings may be provided, if desired.

Such a structure allows for easy adaption of the device to the actual need for brushing of a specific surface.

It has proved advantageous in brushing pig carcasses that the width of sections with relatively short bristles or without bristles be at least 5 cm and preferably not more than 15 cm.

The device according to the invention is suitable for brushing pig carcasses which are conveyed on a slaughter line suspended from gambrels, the device preferably being suspended like a pendulum enabling it to adjust itself to the pig carcasses.

Furthermore, the device is preferably mounted such that its axis of rotation is at an angle of 0-20$^{\circ}$ in relation to the conveying direction of the carcasses past the device.

Three brushing devices embodying the invention will now be described by way of example with reference to the drawings in which each of the three figures shows a lateral sectional view of a respective embodiment.

For the sake of clarity, only the bristles immediately behind the sectional plane are shown in each figure.

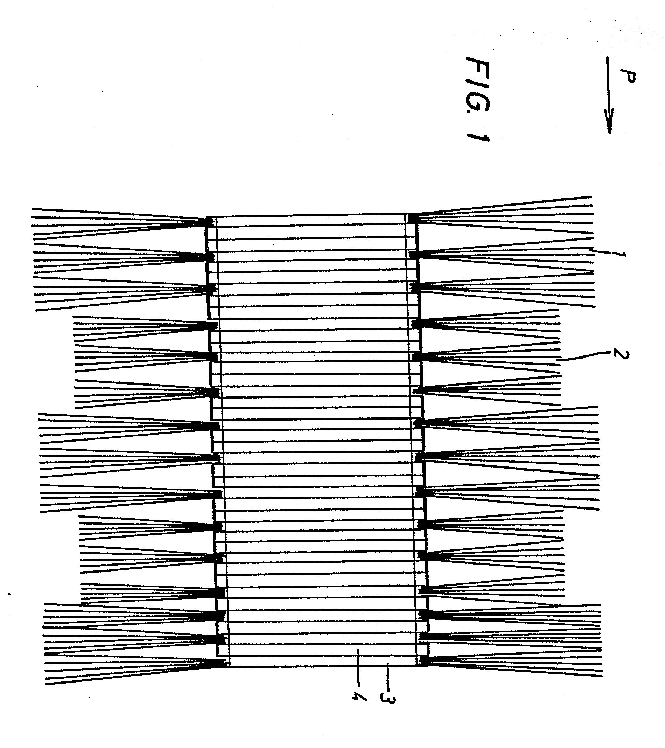

The brushing device of Figure 1 consists of three brush sections 1 with relatively long bristles, and two brush sections 2 with relatively short bristles. It is formed from brush rings 3 and interposed spacer rings 4 which are clamped between flanges (not shown).

The brush rings have plastics material bristles of pentagonal cross section ("Silver-pren", børstefabriken "Dan", Denmark). The outside diameters of the sections 1 and 2 are 750 and 650 mm, respectively, with the basic width of the rings being approximately 12 mm. The outside diameter of the spacer rings is 280 mm with a width of approximately 16 mm.

It will be noted that the device has a relatively high bristle density in the last (right hand) section, where there is only one spacer ring 4 between successive brush rings 3, whereas two spacer rings 4 are provided in the other sections.

The device is suitable for brushing neck and forehead areas of pig carcasses conveyed as indicated by the arrow P in parallel relationship to the axis of rotation of the brushing device.

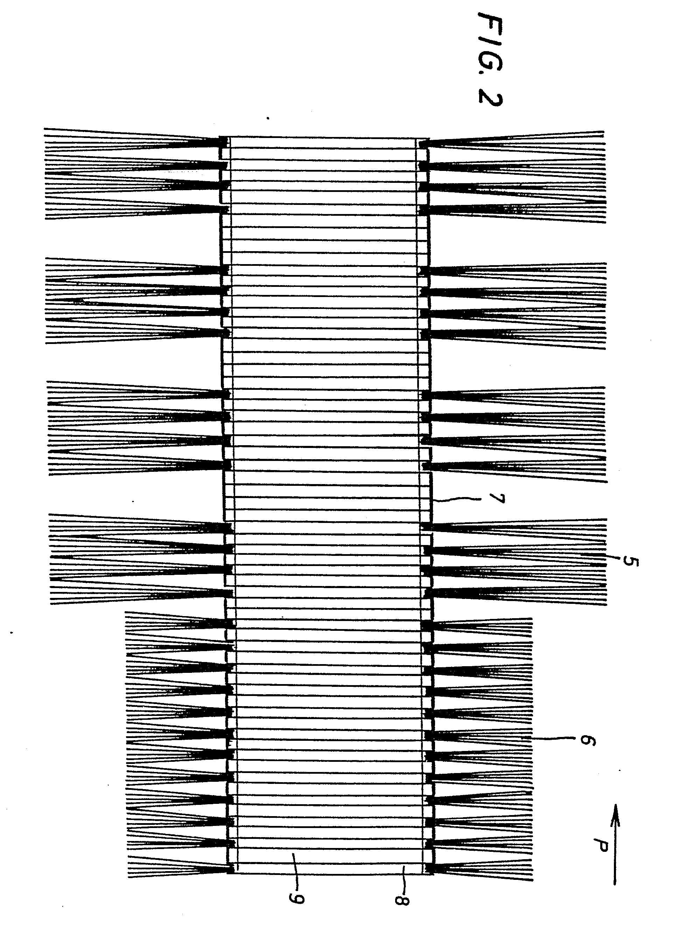

The brushing device of Figure 2 consists of four sections 5 with relatively long bristles, one section 6 with relatively short bristles and three sections 7 without bristles. It is formed from brush rings 8 and spacer rings 9. Spacer rings 9 also form the sections 7 without bristles.

The outside diameters of the sections 5 and 6 are 750 and 550 mm, respectively.

This device is suitable for brushing the breast and fore legs of pig carcasses conveyed as indicated by the arrow P in parallel relationship to the axis of rotation of the brushing device.

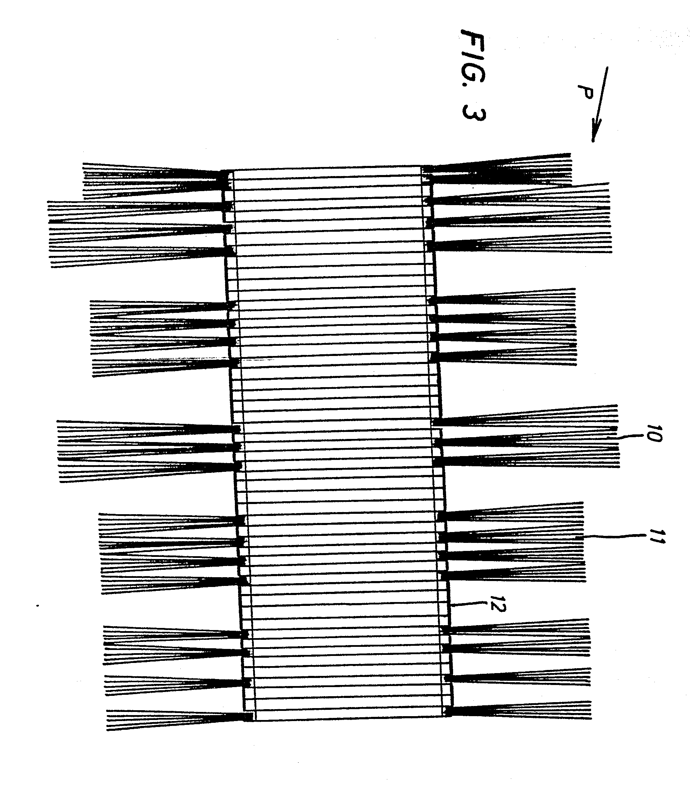

The brushing device of Figure 3 consists of two sections 10 with relatively long bristles, four sections 11 with relatively short bristles, and four sections 12 without bristles. It is formed similarly to the devices of Figures 1 and 2, but the first (left hand) operating section consists of brush rings only. The outside diameters of the sections 10 and 11 are 750 and 650 mm, respectively.

This device is suitable for brushing the foreshank and neck of the right or left side of a pig carcass whose conveying direction P is at an angle of 5-15$^{\circ}$ in relation to the axis of rotation of the brushing device.

Brush rings are particularly economical to use, as the individual rings may be turned about so as to have the opposite rotational direction. This allows the opposite sharp side of the bristles to treat the rind.

Furthermore, brush rings with relatively long bristles may be used again after the bristles have been shortened to the bristle length used in sections with relatively short bristles.

CLAIMS:

1. A brushing device, for use in a rotating brushing machine or similar surface treating apparatus, characterised in that in the axial direction the device comprises a plurality of brush sections (1, 5, 10) with relatively long bristles and other sections (2, 6, 7, 11, 12) with relatively short bristles and/or sections without bristles, the sections with relatively long bristles being separated from each other by sections with relatively short bristles and/or sections without bristles.

2. A device as claimed in Claim 1, characterised in that there are no sections without bristles.

3. A device as claimed in Claim 1, characterised by sections (5) with relatively long bristles and other sections (6) with relatively short bristles and sections (7) without bristles, the sections (5) with relatively long bristles being separated by sections (7) without bristles.

4. A device as claimed in Claim 1, characterised by sections (10) with relatively long bristles and other sections (11) with relatively short bristles and sections (12) without bristles, at least one section without bristles being arranged between a section with relatively long bristles and a section with relatively short bristles.

5. A device as claimed in any one of the prededing claims, characterised in that at least one section (1) with relatively long bristles is formed with greater bristle density than that of any section (2) with relatively short bristles.

6. A device as claimed in any one of the preceding claims, characterised in that it consists of a plurality of clamped brush rings (3, 8) arranged in sections with bristles of even length in each section (1, 2, 5, 6, 10, 11).

7. A device as claimed in Claim 6, characterised by spacer rings (4, 9) between certain brush rings (3, 8).

8. A device as claimed in any one of the preceding claims, characterised in that the width of sections with relatively short bristles or without bristles is at least 5 cm.

9. A device as claimed in Claim 8, characterised in that the width of sections with relatively short bristles or without bristles is not more than 15 cm.

10. Use of the device as claimed in any one of the preceding claims, on a machine for brushing pig carcasses being conveyed on a slaughter line, suspended from gambrels.

11. Use as claimed in Claim 10, characterised in that the axis of rotation of the device is at an angle of $0-20^{\circ}$ in relation to the conveying direction (P) of the carcasses.

12. Use as claimed in Claim 10 or Claim 11, characterised in that the device is suspended like a pendulum.

0118315

FIG. 1

FIG. 2

*FIG. 3*